# EUROPÄISCHE PATENTSCHRIFT

(11) **EP 1 125 043 B1**
(45) Veröffentlichungstag und Bekanntmachung des Hinweises auf die Patenterteilung: **20.04.2005**
(21) Anmeldenummer: 00952917.3
(22) Anmeldetag: 11.07.2000
(51) Int. Cl.: F02M 37/00, F16L 55/04, F02M 55/04

(54) **FLACHROHRDRUCKDÄMPFER ZUR DÄMPFUNG VON FLÜSSIGKEITS-DRUCKSCHWINGUNGEN IN FLÜSSIGKEITSLEITUNGEN**
FLAT TUBULAR PRESSURE DAMPER FOR DAMPING FLUID PRESSURE OSCILLATIONS IN FLUID LINES
ATTENUATEUR DE PRESSION TUBULAIRE PLAT POUR ATTENUER DES VARIATIONS DE PRESSION DE LIQUIDES DANS DES CONDUITES DE LIQUIDES

(30) Priorität: 22.07.1999 DE 19934357
(43) Veröffentlichungstag der Anmeldung: 22.08.2001
(73) Patentinhaber: ROBERT BOSCH GMBH, 70442 Stuttgart (DE)
(72) Erfinder: SCHWEGLER, Helmut, D-74385 Pleidelsheim (DE); MAIER, Martin, D-71696 Moeglingen (DE)
(86) Internationale Anmeldenummer: PCT/DE2000/002251
(87) Internationale Veröffentlichungsnummer: WO 2001/007776

(56) Entgegenhaltungen:
- DE-A- 3 842 298
- GB-A- 890 895
- US-A- 4 861 238
- US-A- 5 896 843

## Beschreibung

### Stand der Technik

Die Erfindung geht aus von einem Flachrohrdruckdämpfer zur Dämpfung von Flüssigkeits-Druckschwingungen in Flüssigkeitsleitungen und von einer Kraftstoffversorgungsleitung nach der Gattung der Patentansprüche 1 und 5.

Durch die US-A-5896 843 ist ein Flachrohrdruckdämpfer mit einer Kammer bekannt, deren Querschnitt sich entlang ihrer Längserstreckung kontinuierlich ändert und deren eines Ende verschlossen ist.

Aus der DE 44 31 770 A1 ist ein Druckimpulsdämpfer für eine Kraftstoffpumpe einer Verbrennungsmaschine bekannt, welcher die von der Kraftstoffpumpe im Kraftstoff erzeugten Druckimpulse dämpft. Der Druckimpulsdämpfer ist ein länglicher, dünnwandiger und in einem Käfig gehaltener Schlauch, der an den Enden abgeklemmt und verschlossen ist, um mindestens eine Kammer zu bilden, in welcher sich ein Gas unter überatmosphärischem Druck befindet. Die Kammer absorbiert und dämpft die durch die Kraftstoffpumpe erzeugten Druckimpulse und Geräusche, indem sich die durch den Schlauch gebildete Kammerwand elastisch verformt und die Schwingungen auf das in der Kammer befindliche Gaskissen überträgt. Durch die elastische Verformung der Kammer und der hieraus resultierenden Kompression des Gaskissens geht Schwingungsenergie verloren, wodurch die Druckschwingungen gedämpft werden. Der Querschnitt der Kammer ist entlang ihrer Längserstreckung konstant und klein dieser gegenüber.

Der bekannte Druckimpulsdämpfer hat den Nachteil, daß wegen seines konstanten Querschnitts eine wirkungsvolle Dämpfung auf ein bestimmtes Spektrum von Anregungsfrequenzen beschränkt ist. Die Ermittlung dieses Spektrums und eine entsprechende konstruktive und fertigungsseitige Anpassung des Druckimpulsdämpfers auf die jeweils vorherrschenden Schwingungen im Kraftstoff ist jedoch zeit- und kostenaufwendig. Zum andern ergibt sich wegen des konstanten Querschnitts des Druckimpulsdämpfers eine bestimmte Eigenfrequenz mit entsprechenden Oberwellen. Bei Übereinstimmung der Eigenfrequenz oder deren Vielfachen mit der Anregungsfrequenz der Druckimpulse im Kraftstoff oder mit der Drehzahl der Verbrennungsmaschine ergeben sich Resonanzschwingungen mit großen Schwingungsamplituden, wodurch die Dämpfungswirkung des Druckimpulsdämpfers stark eingeschränkt wird und unerwünschte Geräusche im Kraftstoffsystem entstehen. Selbst wenn der Druckimpulsdämpfer so ausgelegt wird, daß seine Eigenfreuenz außerhalb des Anregungsbereichs des Kraftstoffsystems oder der Motordrehzahl liegt, so kann bereits durch geringfügige Änderungen im Kraftstoffsystem wie sie im Laufe eines Produkt-Lebenszykluses auftreten, z.B. eine Änderung der Kraftstoffleitungs-länge oder des Leitungsmaterials, das Anregungsspektrum wieder in den Bereich der Resonanzfrequenz verschoben werden.

### Vorteile der Erfindung

Der erfindungsgemäße Flachrohrdruckdämpfer zur Dämpfung von Flüssigkeits-Druckschwingungen hat demgegenüber den Vorteil, daß sich eine wirksame Dämpfung für ein weites Spektrum von Pulsationsanregungsfrequenzen ergibt, die durch die kontinuierlich oder stufenweise Änderung seines Querschnitts bewirkt wird. Die Dämpfungswirkung des Flachrohrdruckdämpfers ist nicht mehr selektiv auf bestimmte Anregungsfrequenzen beschränkt, da die einzelnen Abschnitte unterschiedlichen Querschnitts auf verschiedene Anregungsfrequenzen reagieren. Der Flachrohrdruckdämpfer gemäß der Erfindung, dessen Enden verschlossen sind, ist daher universell für unterschiedliche Kraftstoffsystem- oder Flüssigkeitsleitungssystemkonfigurationen einsetzbar. Da kein einheitlicher Querschnitt mehr vorhanden ist, stellt sich zudem keine ausgeprägte Eigenfrequenz mehr ein, aus welcher sich Resonanzprobleme ergeben könnten.

Durch die in den Unteransprüchen aufgeführten Maßnahmen sind vorteilhafte Weiterbildungen und Verbesserungen des im Patentanspruch 1 angegebenen Flachrohrdruckdämpfers möglich.

Gemäß besonders zu bevorzugender Maßnahmen wird die Kammer durch einen dünnwandigen, ursprünglich zylindrischen Rohrkörper aus Stahlblech gebildet, welcher entlang seiner Längsachse gesehen in unterschiedlichem Maß quer zur Längsachse flachgedrückt ist. Auf diese Weise läßt sich der Flachrohrdruckdämpfer wirtschaftlich herstellen und ist gleichermaßen robust, standfest und zuverlässig.

### Zeichnungen

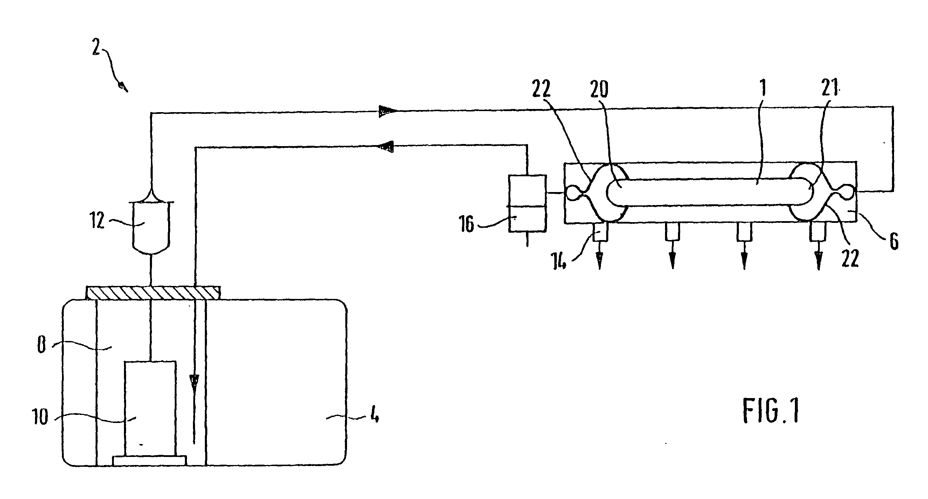

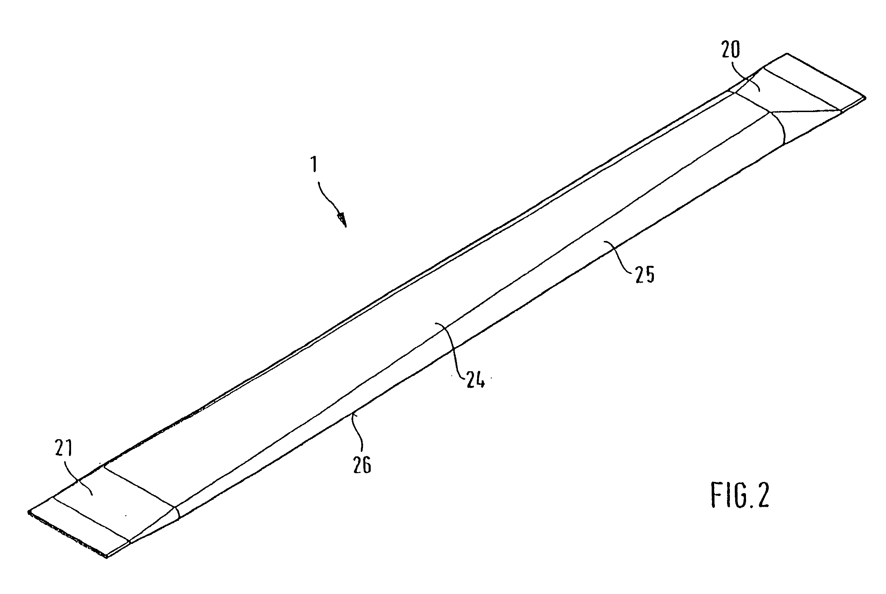

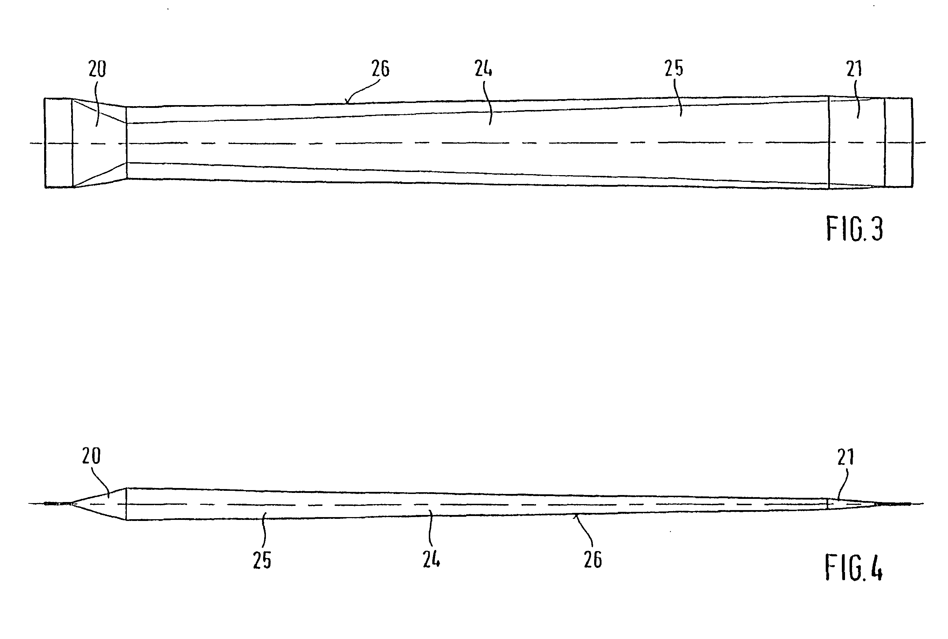

Ein Ausführungsbeispiel der Erfindung ist in den Zeichnungen dargestellt und in der nachfolgenden Beschreibung näher erläutert. Es zeigen Figur 1 eine schematische Darstellung einer Kraftstoffversorgungseinrichtung mit einer bevorzugten Ausführungsform eines Flachrohrdruckdämpfers gemäß der Erfindung, Figur 2 eine isometrische Darstellung des Flachrohrdruckdämpfers von Fig.1, Figur 3 eine Draufsicht auf den Flachrohrdruckdämpfer von Figur 2, und Figur 4 eine Seitenansicht des Flachrohrdruckdämpfers von Figur 2.

### Beschreibung des Ausführungsbeispiels

Es wird ein Flachrohrdruckdämpfer 1 zur Dämpfung von Flüssigkeits-Druckschwingungen in Flüssigkeitsleitungen, insbesondere von Kraftstoff-Druckschwingungen in Kraftstoffversorgungsleitungen von Kraftfahrzeugen vorgeschlagen.

In Fig.1 ist eine Kraftstoffversorgungseinrichtung 2 vereinfacht und schematisch gezeigt, bei welcher Kraftstoff aus einem Tank 4 einem rohrförmigen Kraftstoffverteiler 6 eines im übrigen nicht dargestellten Verbrennungsmotors zugeführt wird. Im Tank 4 ist hierzu eine Tankeinbaueinheit 8 mit einer Kraftstoffpumpe 10 angeordnet. Der Kraftstoffpumpe 10 und dem Kraftstoffverteiler 6 ist ein Kraftstofffilter 12 zwischengeordnet. Im Kraftstoffverteiler 6 wird in bekannter Weise Kraftstoff auf Einspritzventile 14 verteilt. Die Zufuhr des Kraftstoffs erfolgt an einer Stirnseite des Kraftstoffverteilers 6 während an der anderen Stirnseite nicht-eingespritzter Kraftstoff über einen Druckregler 16 zum Tank 4 zurückgeführt wird. Alternativ könnte die Kraftstoffversorgungseinrichtung 2 auch rücklauffrei ausgebildet sein, wobei in einem solchen Fall der Druckregler 16 in der Tankeinbaueinheit 8 angeordnet ist und der Umgebungsdruck als Referenzdruck dient.

Im Inneren des Kraftstoffverteilers 6 ist der erfindungsgemäße Flachrohrdruckdämpfer 1 beispielsweise waagerecht angeordnet, wobei seine beiden Enden 20, 21 durch an den Stirnseiten des Kraftstoffverteilers 6 befestigte Klammern 22 umgriffen sind, so daß der Flachrohrdruckdämpfer 1 mit radialem und axialem Abstand zur Innenwand des Kraftstoffverteilers 6 gehalten und im wesentlichen vollständig von Kraftstoff umgeben ist.

Gemäß dem in Fig.2 bis Fig.4 einzeln dargestellten Flachrohrdruckdämpfer 1 ist jedes seiner beiden Enden 20, 21 vorzugsweise für sich verjüngt und verschlossen, um eine druckdichte Kammer 24 zu bilden. Der Querschnitt der Kammer 24 ist klein gegenüber ihrer Längserstreckung und verjüngt sich seinerseits vom einen Ende 20 zum anderen Ende 21 hin kontinuierlich. Der nicht-konstante Querschnittsverlauf der Kammer 24 ergibt sich, wenn z.B. ein ursprünglich zylindrischer Rohrkörper 25 aus Stahlblech entlang seiner Längsachse gesehen in unterschiedlichem Maß quer zur Längsachse flachgedrückt wird, wie dies insbesondere aus Fig.4 deutlich wird, oder wenn der Rohrkörper bezogen auf seine Längsachse bereits konisch ausgebildet ist und quer zur Längsachse gleichmäßig flach gedrückt wird. Alternativ könnte sich der Querschnittsverlauf der Kammer 24 anstatt kontinuierlich auch stufenweise ändern, indem sich in Längserstreckung des Flachrohrdruckdämpfers 1 Abschnitte unterschiedlichen Querschnitts aneinander reihen.

Die Wandstärke der Kammerwand 26 ist gering, wodurch sie sich in nachgiebiger Weise verformen kann, wenn durch Schaltimpulse der Einspritzventile 14 hervorgerufene Kraftstoff-Druckschwingungen im Kraftstoffverteiler 6 von außen auf sie einwirken. Hierbei wird dem System Schwingungsenergie entzogen, wodurch es zur gewünschten Dämpfung der Kraftstoff-Druckschwingungen kommt. Wegen der langgestreckten Form der Kammer 24 verformt sich diese unter Druckeinwirkung hauptsächlich quer zu ihrer Längserstreckung.

Die Kammer 24 kann ausschließlich mit einem gasförmigen Medium, vorzugsweise mit Luft unter Umgebungsdruck, oder zusätzlich mit einem flüssigen Medium, z.B. Öl, gefüllt sein, damit es bei großen Druckstößen zu keinem Kollabieren der Kammer 24 kommen kann. Alternativ kann die Kammer 24 auch mit jedem anderen Gas und/oder einem anderen flüssigen Medium befüllt sein. Anstatt nur eine Kammer 24 können auch mehrere längliche Kammern mit jeweils nichtkonstantem Querschnittverlauf vorgesehen sein, welche z.B. unterschiedlich lang und schwingungsentkoppelt aneinander gereiht sind. Wenn ein Flachrohrdruckdämpfer mit mehreren Kammern verwendet wird, erhöht sich die Betriebssicherheit, da bei Ausfall einer Kammer die übrigen Kammern immer noch für eine Dämpfung sorgen. Außerdem wird hierdurch die bereits durch den nicht-konstanten Querschnittsverlauf der Kammern bewirkte Erweiterung der Dämpfungswirkung des Flachrohrdruckdämpfers 1 auf ein möglichst breites Frequenzband begünstigt, da die einzelnen Kammern wegen ihrer unterschiedlichen Länge auf verschiedene Frequenzen ansprechen.

Die Verwendung des Flachrohrdruckdämpfers 1 gemäß der Erfindung ist nicht auf kraftstoffführende Leitungen beschränkt, sondern kann bei jeglicher Art von Flüssigkeitsleitung zur Dämpfung von Druckschwingungen dienen. Im Ausführungsbeispiel nach Figur 1 ist die Verwendung des Flachrohrdruckdämpfers 1 in einer Kraftstoffeinspritzanlage einer gemischverdichtenden fremdgezündeten Brennstoffmaschine beschrieben.

## Patentansprüche

1. Flachrohrdruckdämpfer (1) zur Dämpfung von Flüssigkeits-Druckschwingungen in Flüssigkeitsleitungen, insbesondere von Kraftstoff-Druckschwingungen in Kraftstoffversorgungsleitungen (6) von Kraftfahrzeugen, mit mindestens einer länglichen Kammer (24), deren Querschnitt klein gegenüber ihrer Längserstreckung ist und von welcher mindestens ein Teil der Kammerwand (26) mit der Flüssigkeit in Wirkverbindung stehend durch die Flüssigkeits-Druckschwingungen elastisch verformbar ist, wobei entlang der Längserstreckung der Kammer (24) gesehen sich deren Querschnitt kontinuierlich oder stufenweise ändert, **dadurch gekennzeichnet, daß** die Kammer (24) als dünnwandiger Rohrkörper (25) aus Stahlblech ausgebildet ist, dessen Enden (20, 21) verschlossen sind.

2. Flachrohrdruckdämpfer nach Anspruch 1, **dadurch gekennzeichnet, daß** der Querschnitt der Kammer (24) sich von ihrem einen Ende (20) zu ihrem anderen Ende (21) hin kontinuierlich verjüngt.

3. Flachrohrdruckdämpfer nach Anspruch 2, **dadurch gekennzeichnet, daß** der Rohrkörper bezogen auf seine Längsachse konisch ausgebildet und in einer Richtung quer zur Längsachse flach gedrückt ist.

4. Flachrohrdruckdämpfer nach Anspruch 2, **dadurch gekennzeichnet, daß** der Rohrkörper (25) eine ursprünglich zylindrische Form hat und entlang seiner Längsachse gesehen in unterschiedlichem Maß quer zur Längsachse flachgedrückt ist.

5. Kraftstoffversorgungsleitung (6) enthaltend mindestens einen Flachrohrdruckdämpfer (1) nach einem der Ansprüche 1 bis 4.

## Claims

1. Flat-tube pressure damper (1) for the damping of liquid pressure oscillations in liquid lines, in particular of fuel pressure oscillations in fuel supply lines (6) of motor vehicles, with at least one elongate chamber (24), the cross section of which is small in relation to its longitudinal extent and of which at least part of the chamber wall (26), being in active connection with the liquid, can be deformed elastically as a result of the liquid pressure oscillations, a cross section of the chamber (24) changing continuously or in steps, as seen along the longitudinal extent of the latter, **characterized in that** the chamber (24) is designed as a thin-walled tubular body (25) made from sheet steel, the ends (20, 21) of which are closed.

2. Flat-tube pressure damper according to Claim 1, **characterized in that** the cross section of the chamber (24) narrows continuously from one end (20) towards its other end (21).

3. Flat-tube pressure damper according to Claim 2, **characterized in that** the tubular body is designed conically with respect to its longitudinal axis and is pressed flat in a direction transverse to the longitudinal axis.

4. Flat-tube pressure damper according to Claim 2, **characterized in that** the tubular body (25) has an originally cylindrical shape and is pressed flat to a differing extent transversely to its longitudinal axis, as seen along the longitudinal axis.

5. Fuel supply line (6), containing at least one flat-tube pressure damper (1) according to one of Claims 1 to 4.

## Revendications

1. Atténuateur de pression tubulaire plat (1) pour l'atténuation d'oscillations de pression dans des canalisations de liquide, en particulier des oscillations de la pression du carburant dans des canalisations d'alimentation en carburant (6) de véhicules à moteur, avec au moins une chambre allongée (24) dont la section transversale est petite par rapport à sa longueur et dont au moins une partie de la paroi (26) de la chambre se trouvant en liaison active avec le liquide est déformable élastiquement par les oscillations de la pression du liquide, la section transversale de la chambre (24) variant de façon continue ou échelonnée le long de sa longueur,
**caractérisé en ce que**
la chambre (24) a la forme d'un corps tubulaire à paroi mince (25) en tôle d'acier, dont les extrémités (20, 21) sont fermées.

2. Atténuateur de pression tubulaire plat selon la revendication 1,
**caractérisé en ce que**
la section transversale de la chambre (24) se rétrécit de façon continue de sa première extrémité (20) à son autre extrémité (21).

3. Atténuateur de pression tubulaire plat selon la revendication 2,
**caractérisé en ce que**
le corps tubulaire est de forme conique par rapport à son axe longitudinal et est aplati dans une direction transversale à l'axe longitudinal.

4. Atténuateur de pression tubulaire plat selon la revendication 2,
**caractérisé en ce que**
le corps tubulaire (25) a initialement une forme cylindrique et, considéré le long de son axe longitudinal, est aplati dans une mesure différente transversalement à l'axe longitudinal.

5. Canalisation d'alimentation en carburant (6) comportant au moins un atténuateur de pression tubulaire plat (1) selon l'une quelconque des revendications 1 à 4.
